# EUROPÄISCHE PATENTSCHRIFT

(11) **EP 3 376 026 B1**
(45) Veröffentlichungstag und Bekanntmachung des Hinweises auf die Patenterteilung: **15.12.2021**
(21) Anmeldenummer: 17160517.3
(22) Anmeldetag: 13.03.2017
(51) Int. Cl.: F03D 7/04

(54) **VERFAHREN ZUR REGELUNG DER WIRKLEISTUNGSABGABE EINES WINDPARKS SOWIE EIN ENTSPRECHENDER WINDPARK**
METHOD FOR CONTROLLING THE POWER OUTPUT OF A WIND FARM AND CORRESPONDING WIND FARM
PROCÉDÉ DE RÉGLAGE DE LA PUISSANCE ACTIVE D'UN PARC ÉOLIEN ET PARC ÉOLIEN CORRESPONDANT

(43) Veröffentlichungstag der Anmeldung: 19.09.2018
(73) Patentinhaber: Nordex Energy SE & Co. KG, 22419 Hamburg (DE)
(72) Erfinder: Drossel, Detlef, 22851 Norderstedt (DE); Bode, Florian, 22339 Hamburg (DE)
(74) Vertreter: Hauck Patentanwaltspartnerschaft mbB

(56) Entgegenhaltungen:
- DE-A1-102014 000 784
- Anonymous: "Chapter 7.4 - Control Paradigms: Model Following | Engineering360", , 31. Dezember 2005 (2005-12-31), XP055404365, Gefunden im Internet: URL:http://www.globalspec.com/reference/13 560/179909/chapter-7-4-control-paradigms-m odel-following [gefunden am 2017-09-06]

## Beschreibung

Die vorliegende Erfindung betrifft ein Verfahren zur Regelung der Wirkleistungsabgabe eines Windparks ebenso wie einen aus mindestens zwei Windenergieanlagen bestehenden Windpark.

Mit zunehmendem Einsatz von Windenergieanlagen, sei es an Land oder auf See, wird deren Bedeutung für das elektrische Versorgungsnetz größer. Im Hinblick auf die Einspeisung von Wirkleistung führt dies dazu, dass vorgegebene Sollwerte für die am Netzanschlusspunkt eingespeiste Wirkleistung möglichst exakt eingehalten werden sollen. Dies betrifft sowohl den stationären Zustand, bei dem, ausreichend Wind vorausgesetzt, ein konstanter Betrag an Wirkleistung eingespeist wird, wie auch das dynamische Verhalten, bei dem eine Sollwertvorgabe zeitlich geändert wird.

Aus DE 10 2014 000 790 A1 ist eine Windparkregelung mit einem verbesserten Sollwertverhalten bekannt geworden. Der Windpark weist einen Parkmaster mit einem Leistungsregler zur Regelung der in dem Windpark enthaltenen Windenergieanlagen auf. Ein Sollwert für die Leistungsabgabe des Windparks liegt an dem Parkmaster an und wird für die Windenergieanlage als Sollwertsignale für die Leistungsabgabe ausgegeben. Die Sollwerte für die Windenergieanlagen werden bei einer Änderung des Sollwertsignals für den Windpark korrigiert, wobei der korrigierte Sollwert auf den Leistungsregler aufgeschaltet ist. Mit einem Prädiktor wird der Sollwert für die Windenergieanlage berechnet, wobei hier unterschiedliche Betriebszustände der Windenergieanlagen und unterschiedliche Leistungswerte berücksichtigt werden.

Aus DE 10 2014 000 784 A1 ist ein Windpark mit Vorsteuerung im Leistungsregler bekannt geworden. Der Windpark besitzt einen Parkmaster, der zur Führung der Windenergieanlagen ausgebildet ist, wobei der Parkmaster einen Leistungsregler umfasst. Der Leistungsregler besitzt ein Vorsteuermodul, das ein Maß für die Sollleistung über ein Multiplikationsglied auf den Ausgang des Leistungsreglers aufschaltet. Hierdurch soll ein beschleunigtes Ansprechverhalten der Vorsteuerung bei einer Sollwertreduktion erzielt werden und ein gegenüber dem Betriebszustand des Windparks robustes Ansprechverhalten geschaffen werden.

Der vorliegenden Erfindung liegt die Aufgabe zugrunde, ein Verfahren zur Regelung der Wirkleistungsabgabe eines Windparks sowie einen solchen anzugeben, das bzw. der mit möglichst einfachen Mitteln Sollwertvorgaben für den Windpark schnell und genau umsetzt.

Erfindungsgemäß wird die Aufgabe durch ein Verfahren mit den Merkmalen nach Anspruch 1 sowie einen Windpark mit den Merkmalen nach Anspruch 7 gelöst. Vorteilhafte Ausgestaltungen bilden die Gegenstände der Unteransprüche.

Das erfindungsgemäße Verfahren ist zur Regelung der Wirkleistungsabgabe eines Windparks mit mindestens zwei Windenergieanlagen vorgesehen. Grundsätzlich kann auch jede andere elektrische Größe des Windparks erfindungsgemäß geregelt werden. Der Windpark besitzt mindestens zwei Windenergieanlagen, deren Leistungsabgabe jeweils durch einen Windenergieanlagenregler bestimmt ist. Die Windenergieanlagen können vom gleichen oder verschiedenen Bautyp sein. Bei dem erfindungsgemäßen Verfahren wird ein Sollwert der von dem Windpark abzugebenden Wirkleistung an ein Windparkmodell angelegt, das einen modellierten Wirkleistungssollwert des Windparks erzeugt. Der modellierte Wirkleistungssollwert entspricht dem Sollwert für den Windpark, den dieser in Summe an seinem Netzverknüpfungspunkt mit einem Energieversorgungsnetz einspeisen soll. Der modellierte Wirkleistungssollwert wird zusammen mit dem Istwert der von dem Windpark abgegebenen Windparkleistung an einen Leistungsregler angelegt. Der Leistungsregler stellt abhängig von den anliegenden Eingangsgrößen eine Reglerstellgröße bereit. Zu der Reglerstellgröße wird eine unabhängig von den Zuständen des Windparks und seinen Istwerten bestimmte Vorsteuerstellgröße zu einer Gesamtstellgröße addiert.

Erfindungsgemäß bestimmt sich der modellierte Wirkleistungssollwert des Windparks aus einer Summe von modellierten Wirkleistungssollwerten der einzelnen Windenergieanlagen in dem Windpark. Der Sollwert des Windparks wird auf Modelle der in dem Windpark enthaltenen Windenergieanlagen aufgeteilt, wobei die Modelle jeweils einen modellierten Sollwert der Wirkleistung der jeweiligen Windenergieanlage, abhängig von dem auf das Modell entfallenden Sollwert des Windparks bestimmen. Bei dem erfindungsgemäßen Verfahren wird der modellierte Wirkleistungssollwert des Windparks durch viele Einzelmodelle gebildet, die jeweils das Verhalten der einzelnen Windenergieanlagen abbilden, so dass für jede Windenergieanlage der jeweilige modellierte Sollwert im Rahmen einer Modellgenauigkeit dem für die jeweilige Windenergieanlage bestimmten Sollwert entspricht. Vorteil bei dieser Modellierung des Sollwerts ist, dass nicht das Verhalten des gesamten Windparks, sondern das Verhalten von Windenergieanlagen modelliert wird und so eine gute Genauigkeit bei der Vorsteuerung erzielt werden kann. Je nach Ausgestaltung können eine oder mehrere Windenergieanlagen in einem Modell ausgebildet sein.

In einer bevorzugten Ausgestaltung wird bei dem erfindungsgemäßen Verfahren die Gesamtstellgröße auf Anlagenstellgrößen der Windenergieanlagen in dem Windpark aufgeteilt. Die mit der additiven Vorsteuerung bestimmte Gesamtstellgröße wird bei dem erfindungsgemäßen Verfahren auf Anlagenstellgrößen aufgeteilt. Die aus der Aufteilung ermittelten Anlagenstellgrößen können an den Reglern der einzelnen Windenergieanlagen anliegend die von der Windenergieanlage bereitzustellende Wirkleistung vorgeben. Wichtig bei der Aufteilung der Gesamtstellgröße ist, dass die Regelung auf einen für den Windpark vorgegebenen Sollwert hin erfolgt, während das Bereitstellen der Wirkleistung durch die aufgeteilten Stellgrößen für die Windenergieanlagen erfolgt. Es wird hierbei bevorzugt das Verhalten des gesamten Windparks durch die Modelle der Windenergieanlagen ausgebildet.

In einer bevorzugten Weiterbildung werden die Anlagenstellgrößen derart bestimmt, dass jeweils ein einer Anlagenstellgröße entsprechender Wert der von der Anlage erzeugten Wirkleistung dem modellierten Sollwert der Wirkleistung der Windenergieanlage entspricht. Bei dem erfindungsgemäßen Verfahren erfolgt an zwei Stellen eine Aufteilung von für den gesamten Windpark vorgegebenen Werten in anlagenspezifische Werte. Eine Aufteilung erfolgt bei der Bildung der modellierten Wirkleistungssollwerte für die einzelnen Modelle der Windenergieanlagen. Die modellierten Wirkleistungssollwerte für die einzelnen Modelle der Windenergieanlagen werden aus dem Wirkleistungssollwert des Windparks bestimmt. Die Modelle der Windenergieanlagen ermitteln abhängig von den anliegenden aufgeteilten Wirkleistungssollwerten modellierte Wirkleistungssollwert, die dann zu einem modellierten Wirkleistungssollwert des Windparks addiert werden. Eine weitere Aufteilung erfolgt bei der Bereitstellung von aufgeteilten Stellgrößen für die einzelnen Regler der Windenergieanlagen des Windparks. Die aufgeteilten Stellgrößen werden aus der Gesamtstellgröße bestimmt. Die Aufteilung der Gesamtstellgröße auf die Anlagenstellgrößen kann beispielsweise anhand von verfügbaren Wirkleistungswerten erfolgen, die von den einzelnen Windenergieanlagen bzw. deren Reglern angegebenen werden. Ebenso kann die Aufteilung des Wirkleistungssollwerts des Windparks auf die modellierten Wirkleistungssollwerte für die einzelnen Modelle der Windenergieanlagen anhand der von den einzelnen Windenergieanlagen angegebenen verfügbaren Wirkleistung erfolgen.

In einer Weiterbildung liegt mindestens eine Zustandsgröße der Windenergieanlagen an den jeweiligen Modellen der Windenergieanlagen an, um eine Abweichung zwischen Istwert der Wirkleistung der Windenergieanlage und dem modellierten Leistungswert zu minimieren. Bevorzugt handelt es sich bei der Zustandsgröße um eine Information über einen in den jeweiligen Windenergieanlagen aktiven Betriebsmodus. Dies ist besonders vorteilhaft, wenn die Modellierung auf einem zentralen Windparkregler umgesetzt ist. Durch die Reduzierung von Informationen auf solche zu aktiven Betriebsmodi kann, wenn die Modelle der Windenergieanlagen die entsprechenden Modi kennen, das Datenvolumen, das über ein Windparknetzwerk zwischen den Reglern der Windenergieanlagen und dem Windparkregler ausgetauscht deutlich reduziert werden. Beispiele für einen solchen Modus sind ein schallreduzierter Betrieb, ein leistungsreduzierter Betrieb aufgrund eines defekten Bauteils oder ein leistungsreduzierter Betrieb aufgrund einer Betriebstemperatur. Grundsätzlich können solche Modi jedweden eine spezifische Windenergieanlage betreffenden Zustand beschreiben. Alternativ oder ergänzend können als weitere Zustandsgrößen auch ausgewählte Betriebsparameter von den einzelnen Windenergieanlagen bereitgestellt werden z.B. eine Information über eine aktuelle Drehzahl. Für komplexe Modellierungsverfahren kann das Windparknetzwerk für ein entsprechendes Datenvolumen ausgelegt und die Modellierung vollständig im Windpark zentralisiert werden. So kann beispielsweise durch eine zentrale Server-Architektur ausreichende Rechenleistung und Redundanz bereitgestellt werden. Das Zurückführen der Zustandsgrößen auf die Modelle bedeutet nicht, dass hier eine Regelung von Größen des Windparks auf Ebene der einzelnen Windenergieanlagen erfolgt. Vielmehr dienen die zurückgeführten Zustandsgrößen der Windenergieanlagen dazu, dass das aktuelle Verhalten der Windenergieanlagen, welches stark von den Betriebsmodi abhängig ist, bei der Modellierung berücksichtigt werden kann und Abweichungen durch einen falschen gewählten Modellansatz vermieden werden können. Mithilfe der zurückgeführten Zustandsgrößen werden also Fehler bei der Modellbildung minimiert bzw. wird das dynamische Verhalten der einzelnen Windenergieanlagen besser abgebildet. Der modellierte Wirkleistungssollwert einer einzelnen Windenergieanlage ist somit, genau wie die von der Windenergieanlage tatsächlich eingespeisten Wirkleistung von aktuellen Zustandsgrößen / Betriebsmodi abhängig.

In einer bevorzugten Weiterführung des erfindungsgemäßen Verfahrens bilden die Modelle für die in dem Windpark enthaltenen Windenergieanlagen spezifische Parameter der Windenergieanlagen ab. Dies bedeutet, dass der modellierte Wirkleistungswert für verschieden konfigurierte Windenergieanlagen auch voneinander verschieden sein kann.

Die erfindungsgemäße Aufgabe wird ebenfalls durch einen Windpark mit den Merkmalen aus Anspruch 7 gelöst. Der erfindungsgemäße Windpark weist mindestens zwei Windenergieanlagen auf, ferner einen Windparkregler, an dem ein extern vorgegebener Wirkleistungssollwert für die von dem Windpark einzuspeisende Wirkleistung an seinem Netzverknüpfungspunkt anliegt. Der Windparkregler weist eine Vorsteuereinheit auf, die unabhängig von Betriebszuständen des Windparks und deren Istwerten eine Vorsteuerstellgröße ermittelt. Ferner weist der Windparkregler ein Windparkmodell auf, das vorgesehen und eingerichtet ist, um aus dem Sollwert der von dem Windpark abzugebenden Wirkleistung einen modellierten Wirkleistungssollwert des Windparks zu erzeugen. Ein Differenzglied ist eingerichtet, aus dem modellierten Wirkleistungswert (P'ₛₑₜ) des Windparks und einem Istwert der von dem Windpark abgegebenen Wirkleistung eine Regeldifferenz zu ermitteln. Ferner ist ein Leistungsregler eingerichtet, aus der Regeldifferenz eine Reglerstellgröße zu ermitteln. Ein weiterhin vorgesehenes Summationsglied ist eingerichtet, um aus der Vorsteuerstellgröße und der Reglerstellgröße eine Gesamtgröße als Wirkleistungssollwert für den Windpark zu ermitteln. Erfindungsgemäß ist das Windparkmodell für jede in dem Windpark enthaltene Windenergieanlage mit einem Anlagenmodell ausgestattet. An den jeweiligen Anlagenmodellen liegt ein Anteil der von dem Windpark abzugebenden Wirkleistung an. Die Modelle der einzelnen Windenergieanlagen sind eingerichtet, abhängig von dem jeweils vorgegebenen Anteil der von dem Windpark einzuspeisenden Wirkleistung, einen modellierten Wirkleistungssollwert der durch die modellierte Windenergieanlage zu erzeugenden Wirkleistung zu ermitteln.

Das in dem erfindungsgemäßen Windpark vorgesehene Windparkmodell ist durch seine den Windenergieanlagen zugeordnete Anlagenmodelle gekennzeichnet. In einer bevorzugten Ausgestaltung sind die Anlagenmodelle eingerichtet, das Verhalten der jeweiligen einzelnen Windenergieanlagen abhängig von anliegenden Zustandsgrößen zu modellieren. Wie bereits im Zusammenhang mit dem Verfahren beschrieben, können die Zustandsgrößen Informationen über aktive Betriebsmodi der Windenergieanlagen und/oder zu Betriebsparametern betreffen. Die Zustandsgrößen werden dem Windparkmodell bzw. den Modellen der Windenergieanlagen von den einzelnen Windenergieanlagen bzw. deren Reglern als Eingangsgrößen für die Modellierung bereitgestellt.

Hierbei ist es nicht notwendig, dass jedem Anlagenmodell nur eine einzige Windenergieanlage aus dem Windpark zugeordnet ist. Es können auch mehrere Windenergieanlagen in einem Modell zusammengefasst sein, wobei eine solche Zusammenfassung anhand von gleichzeitig bei den zusammengefassten Windenergieanlagen vorliegenden Betriebsmodi erfolgen kann. Beispielsweise können durch ein einziges Modell alle Windenergieanlagen einer gleichen Baureihe modelliert werden, die sich aktuell in einem schallreduzierten Betriebsmodus befinden. Die durch den Windpark zu erzeugende Wirkleistung wird als Wirkleistungssollwert durch eine erste Aufteileinheit auf die Modelle der einzelnen Windenergieanlagen aufgeteilt, die eingerichtet sind, abhängig von den anliegenden aufgeteilten Wirkleistungssollwerten sowie abhängig von wenigstens einer anliegenden Zustandsgröße der modellierten Windenergieanlage bzw. Windenergieanlagen (bei Zusammenfassung mehrere Anlagen), basierend auf dem entsprechenden Anlagenmodell, einen modellierten Wirkleistungssollwert für die von den modellierten Anlagen zu erzeugenden Wirkleistung zu ermitteln. Die erste Aufteileinheit ist eingerichtet, den vorgegebenen Wirkleistungssollwert des Windparks auf die Modelle für die im Windpark enthaltenen Windenergieanlagen aufzuteilen. Die Aufteilung kann beispielsweise anhand von verfügbaren Wirkleistungswerten erfolgen, die von den einzelnen Windenergieanlagen bzw. deren Reglern angegebenen werden und als Eingangsgrößen an der Aufteileinheit anliegen. Werden Anlagen in einem Modell zusammengefasst, so gibt die erste Aufteileinheit einem solchen Modell einen aggregierten Wert der von diesen Windenergieanlagen als verfügbar angegebenen Wirkleistung vor. An der ersten Aufteileinheit liegen dazu, analog zu den Modellen, Zustandsgrößen der Anlagen an.

Das Windparkmodell weist ein erstes Summationsglied auf, welches eingerichtet ist, die modellierten Wirkleistungssollwerte für die einzelnen Windenergieanlagen zu einem modellierten Wirkleistungssollwert für den Windpark aufzusummieren und den ermittelten Sollwert einem Subtraktionsglied bereitzustellen. Das Subtraktionsglied des Windparkreglers ist eingerichtet, abhängig von dem anliegenden modellierten Wirkleistungssollwert für den Windpark und einem anliegenden Istwert der am Netzverknüpfungspunkt des Windparks eingespeisten Wirkleistung, eine Regeldifferenz für einen Leistungsregler des Windparkreglers bereitzustellen. Der Leistungsregler ist eingerichtet, abhängig von der anliegenden Regeldifferenz eine Reglerstellgröße bereitzustellen. Die Reglerstellgröße liegt gemeinsam mit der von der Vorsteuereinheit bereitgestellten Vorsteuerstellgröße an einem zweiten Summationsglied an, welches eingerichtet ist, eine Gesamtstellgröße für die Wirkleistungsabgabe des Windparks als Summe aus Vorsteuerstellegröße und Reglerstellgröße zu bilden und einer zweiten Aufteileinheit bereitzustellen.

Die zweite Aufteileinheit des Windparkreglers ist eingerichtet, die Gesamtstellgröße für die von dem Windpark abzugebende Wirkleistung auf für die einzelnen Windenergieanlagen vorgesehene Sollwerte aufzuteilen und einen entsprechenden Wirkleistungssollwert für die einzelnen Windenergieanlagen bzw. deren Regler bereitzustellen. Die Aufteilung kann komplementär zu der Aufteilung des Wirkleistungssollwerts in der ersten Aufteileinheit vorgenommen werden. Erste und zweite Aufteileinheit korrespondieren insofern zueinander, als dass die Aufteilung des Sollwerts für den Windpark bei der Bestimmung des modellierten Sollwerts genauso erfolgt, wie eine Aufteilung und Anwendung der Anlagenstellgrößen für die Windenergieanlage. In Abhängigkeit der Vorsteuerung und der verwendeten Modelle kann erreicht werden, dass die modellierten Sollwerte für die einzelnen Anlagen und die von der zweiten Aufteileinheit für die einzelnen Anlagen bereitgestellten Sollwerte auch bei starken Änderungen des Eingangs an dem Windparkregler anliegenden Sollwertes nur geringfügig voneinander abweichen. Bevorzugt liegt mindestens eine Zustandsgröße einer der Windenergieanlagen an dem jeweiligen Modell an, um eine Abweichung vom Wirkleistungsistwert der Windenergieanlage und dem modellierten Wirkleistungssollwert der Windenergieanlage zu minimieren.

Ein besonderer Vorteil des erfindungsgemäßen Windparks besteht darin, dass die Regelung der durch den Windpark einzuspeisenden Wirkleistung über die Modelle, welche die Betriebsmodi der einzelnen Windenergieanlagen berücksichtigen, auf erzeugenden Windenergieanlagen heruntergebrochen wird, und so eine bessere Dynamik der Regelung erreicht werden kann. Durch die Parkmodellierung nähert sich der modellierte Wirkleistungssollwert des Windparks an den Istwert der am Netzverknüpfungspunkt des Windparks eingespeisten Wirkleistung an und die Regeldifferenz an dem Subtraktionsglied konvergiert gegen Null. Das Modell kompensiert bzw. reduziert so eine unzureichende Dynamik des Leistungsreglers.

Ein bevorzugtes Ausführungsbeispiel der Erfindung wird nachfolgend erläutert. Es zeigen:
- Fig. 1: ein Blockschaltbild eines Windparks mit einer Vorsteuerung und einer Aufteilung der Stellgrößen auf die einzelnen Windenergieanlagen,
- Fig. 2: den Aufbau des Windparkmodells aus Fig. 2 mit einer Aufteilung eines Sollwertes auf für den Windpark auf Sollwerte für Modelle einzelner Windenergieanlagen, und
- Fig. 3: ein Blockschaltbild eines Windparks mit einer Vorsteuerung und einem Windparkmodell, an welchem Zustandsgrößen der Windenergieanlagen anliegen, sowie einer Aufteilung der Stellgrößen auf die einzelnen Windenergieanlagen.

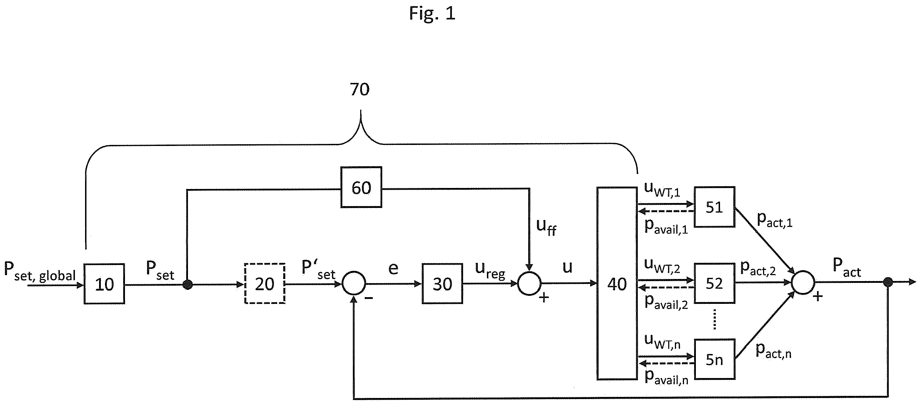

Fig. 1 zeigt in einem Blockschaltbild, wie ein extern vorgegebener Wirkleistungssollwert des Windparks P_{set,global} an eine Begrenzungs- und Rampeneinheit 10 eines Windparkreglers 70 angelegt wird. Der Wirkleistungssollwert des Windparks P_{set,global} ist ein extern vorgegebener Sollwert für die von dem Windpark abzugebende Wirkleistung. Dieser extern vorgegebene Sollwert kann beispielsweise durch eine logisch übergeordnete Einheit des Netzbetreibers dem Windpark vorgegeben werden. Dieser vorgegebene Sollwert ist soweit und so genau wie möglich bei gegebenen Windverhältnissen einzuhalten. In der Rampen- und Begrenzungseinheit 10 wird der von extern vorgegebene Wirkleistungssollwert für den Windpark auf die für den Windpark möglichen Sollwerte und Sollwertsprünge begrenzt. Ebenso werden Änderungen in dem vorgegebenen Wirkleistungssollwert durch Rampen verstetigt. Fachsprachlich kann der extern vorgegebene Wirkleistungssollwert als eine Führungsgröße angesehen werden, die durch die Rampen- und Begrenzungseinheit in einen Sollwert umgesetzt wird. Der so verstetigte Sollwert für die Wirkleistung liegt an einem Windparkmodell 20 des Windparkreglers 70 an. Das Windparkmodell 20 erzeugt einen modellierten Wirkleistungssollwert für den Windpark P'ₛₑₜ. Der modellierte Wirkleistungssollwert gibt die Antwort des Windparks auf den internen Wirkleistungssollwert Pₛₑₜ an. Der modellierte Wirkleistungssollwert P'ₛₑₜ kann als ein erwarteter Istwert angesehen werden, der angibt, welcher Istwert als Antwort auf den Sollwert erzeugt wird. Aus dem modellierten Wirkleistungssollwert P'ₛₑₜ und dem gemessenen Istwert der am Netzverknüpfungspunkt des Windparks eingespeisten Wirkleistung P_{act} wird durch ein Subtraktionsglied des Windparkreglers 70 eine Regeldifferenz e gebildet. Die Regeldifferenz e ist die Differenz aus modelliertem Wirkleistungssollwert und Istwert der abgegebenen Wirkleistung. Über einen Leistungsregler 30 des Windparkreglers 70 wird aus der Regelgröße e eine Reglerstellgröße u_{reg} ermittelt. Die Reglerstellgröße u_{reg} gibt an, wie aufgrund des Windparkmodells 20 und des Leistungsreglers 30 zu regeln ist. Stimmt das Modell mit dem Windpark überein und befindet sich der Windparkregler 30 in seinem eingeschwungenen Zustand, so wird die Regelgröße e im Wesentlichen verschwinden (gleich Null sein) und damit auch die Reglerstellgröße u_{reg}.

Die Gesamtstellgröße u wird gebildet durch ein Summationsglied des Windparkreglers 70, welches die Summe der durch eine Vorsteuereinheit 60 des Windparkreglers 70 ermittelten Vorsteuerstellgröße u_{ff} und der Reglerstellgröße u_{reg}. Die Aufschaltung der Vorsteuereinheit 60 erfolgt additiv. Im Rahmen der Vorsteuerung ist es möglich, den Leistungsregler 30 mit seinen Zeitkonstanten und seinem Ansprechverhalten entsprechend den üblicherweise in einem Windpark auftretenden Störgrößen zu dimensionieren. Die Gesamtstellgröße u für den Windpark wird in einer zweiten Aufteileinheit 40 des Windparkreglers 70 auf die einzelnen Stellgrößen u_{wea,1}, u_{wea,2}, ..., u_{wea,n} aufgeteilt, die die Stellgrößen für die einzelnen Windenergieanlagen in dem Windpark bilden.

Jede Windenergieanlage in dem Windpark besitzt einen Regler. Die Regler der Windenergieanlagen 51, 52, ..., 5n sind in Fig. 1 schematisch dargestellt. Bei der Aufteilung der Stellgrößen u_{wea,1}, u_{wea,2}, ..., u_{wea,n} in der zweiten Aufteileinheit 40 werden die Stellgrößen so auf die einzelnen Windenergieanlagen aufgeteilt, dass die von der Windenergieanlage erzeugte Wirkleistung in der Summe dem Istwert der am Netzverknüpfungspunkt des Windparks abzugebenden Wirkleistung P_{act} entspricht. Zu der von dem Windpark abzugebenden Wirkleistung liefert jede Windenergieanlage 51, 52, ..., 5n einen Beitrag. Bei der Aufteilung der Gesamtstellgröße u kann beispielsweise berücksichtigt werden, dass die in dem Windpark zugefassten Windenergieanlagen unterschiedliche Nennleistungen besitzen. Auch Leistungsreserven, Wartungsarbeiten und andere anlagenspezifische Größen und Vorgaben können hier berücksichtigt werden. Um dem extern vorgegebenen Wirkleistungssollwert möglichst schnell folgen zu können, können beispielsweise auch unterschiedliche Regelungszeiten der einzelnen Windenergieanlagen bei der Aufteilung berücksichtigt werden. Eine schnelle Regelung lässt sich beispielsweise dadurch sicherstellen, wenn die Aufteilung des Sollwerts auf die einzelnen Anlagen anhand der von den einzelnen Anlagen als verfügbar gemeldete Leistung p_{avail,1}, p_{avail,2}, ..., p_{avail,n} erfolgt.

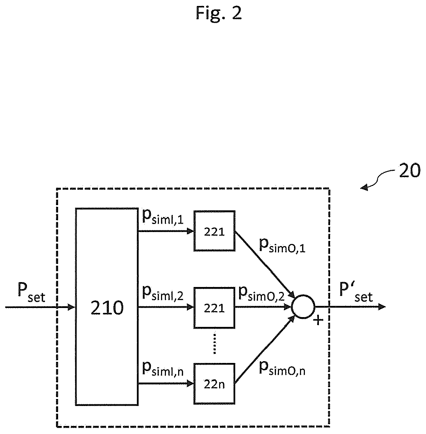

Die genauere Aufteilung der Stellgrößen u ergibt sich aus dem genaueren Aufbau des Windparkmodells 20 in Fig. 2. Auch in dem Windparkmodell 20 des Windparkreglers 70 wird der anliegende interne Wirkleistungssollwert Pₛₑₜ für den gesamten Windpark in einer ersten Aufteileinheit 210 auf Sollwerte für die einzelnen Windenergieanlagen p_{siml,1}, p_{siml,2}, ..., p_{siml,n} aufgeteilt. Die aufgeteilten Sollwerte liegen an dem jeweiligen Modell der Windenergieanlage 221, 222, ...22n an. Ausgangsgrößen der Modelle zu den Windenergieanlagen sind die modellierten Wirkleistungssollwerte der Windenergieanlagen p_{simO,1}, p_{simO,2}, ..., p_{simO,n}. Diese Größen werden zu dem modellierten Wirkleistungswert P'ₛₑₜ aufaddiert.

Die Modelle 221, 222, ..., 22n entsprechen dabei entweder einzelnen Windenergieanlagen oder mehreren Windenergieanlagen in dem Windpark, die aufgrund von technischen Besonderheiten zu einer Gruppe von Windenergieanlagen zusammengefasst wurden. Beispielsweise können baugleiche Windenergieanlagen, Windenergieanlagen mit vergleichbaren Windstandorten und/oder Windenergieanlagen mit vergleichbarer Nennleistung in einer Gruppe zusammengefasst werden.

Ein wichtiger Aspekt in dem dargestellten Ausführungsbeispiel besteht darin, dass die modellierten Wirkleistungen der einzelnen Windenergieanlagen p_{simO,i} ungefähr dem Wirkleistungsistwert der Windenergieanlage P_{act,i} entspricht. Dies bedeutet, dass die Aufteilung des Sollwerts Pₛₑₜ für den Windpark komplementär zu der Aufteilung der Stellgröße U auf die einzelnen Windenergieanlagen erfolgt.

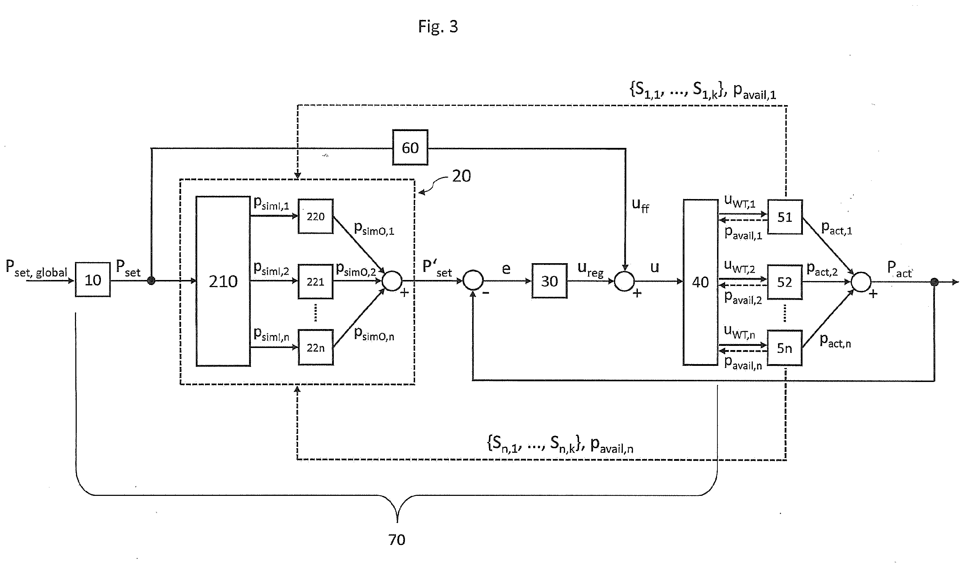

Fig. 3 zeigt eine Erweiterung gegenüber dem in Fig. 1 dargestellten Blockschaltbild durch die Kombination mit dem in Fig. 2 detaillierter dargestellten Windparkmodell 20, bei der eine Menge von k Zustandsgrößen {S_{i,1}, S_{i,2} ... S_{i,k}} für die i-te Windenergieanlage an die Modelle der einzelnen Windenergieanlagen übermittelt werden. Hierdurch können die Modelle der Windenergieanlagen 220, 221, ..., 22n jeweils an die Betriebszustände angepasst und die modellierte Wirkleistungssollwerte der Windenergieanlage p_{simO,i} besser simuliert werden. In einer bevorzugten Ausgestaltung greift das i-te Modell der Windenergieanlage auf die k Zustandsgrößen {S_{i,1}, S_{i,2} ... S_{i,k}} der i-ten Windenergieanlage zurück. Eine solche Anpassung erlaubt es stärker, das Verhalten der Führungsgröße von dem Verhalten der Störgrößen zu trennen und kann auf diese Weise einem vorgegebenen Sollwert besser und genauer folgen. Für k = 1 kann beispielsweise die Zustandsgröße dem Istwert der eingespeisten Wirkleistung entsprechen.

### Bezugszeichenliste

- 10: Begrenzungs- u. Rampeneinheit
- 20: Windparkmodell
- 210: erste Aufteileinheit
- 221: Modell der 1. Windenergieanlage
- 222: Modell der 2. Windenergieanlage
- 22n: Modell der n-ten Windenergieanlage
- 30: Leistungsregler
- 40: zweite Aufteileinheit für die Gesamtstellgröße
- 51: Regler der 1. Windenergieanlage
- 52: Regler der 2. Windenergieanlage
- 5n: Regler der n-ten Windenergieanlage
- 60: Vorsteuereinheit
- 70: Windparkregler
- P_{set, global}: extern vorgegebener Wirkleistungssollwert des Windparks
- Pₛₑₜ: interner Wirkleistungssollwert des Windparks
- p_{siml,1}: auf die 1. Windenergieanlage für die Modellierung aufgeteilter Wirkleistungssollwert
- p_{siml,2}: auf die 2. Windenergieanlage für die Modellierung aufgeteilter Wirkleistungssollwert
- p_{siml,n}: auf die n-te Windenergieanlage für die Modellierung aufgeteilter Wirkleistungssollwert
- p_{simO,1}: modellierter Wirkleistungssollwert der 1. Windenergieanlage
- p_{simO,2}: modellierter Wirkleistungssollwert der 2. Windenergieanlage
- p_{simO,n}: modellierter Wirkleistungssollwert der n-ten Windenergieanlage
- P'ₛₑₜ: modellierter Wirkleistungssollwert des Windparks
- P_{act}: Istwert der am Netzverknüpfungspunkt des Windparks eingespeisten Wirkleistung
- e: Regeldifferenz zwischen modelliertem Wirkleistungssollwert und Istwert der abgegebenen Wirkleistung des Windparks
- u_{reg}: Reglerstellgröße
- u_{ff}: Vorsteuerstellgröße
- u: Gesamtstellgröße als Summe aus Vorsteuerstellegröße und Reglerstellgröße
- u_{WT,1}: aufgeteilte Stellgröße für die 1. Windenergieanlage
- u_{WT,2}: aufgeteilte Stellgröße für die 2. Windenergieanlage
- u_{WT,n}: aufgeteilte Stellgröße für die n-te Windenergieanlage
- p_{avail,1}: verfügbare Wirkleistung der 1. Windenergieanlage
- p_{avail,2}: verfügbare Wirkleistung der 2. Windenergieanlage
- p_{avail,n}: verfügbare Wirkleistung der n-ten Windenergieanlage
- p_{act,1}: Wirkleistungsistwert der 1. Windenergieanlage
- p_{act,2}: Wirkleistungsistwert der 2. Windenergieanlage
- p_{act,n}: Wirkleistungsistwert der n-ten Windenergieanlage
- {S_{1,1}, ..., S_{1,k}}: Menge von k-Zustandsgrößen der 1. Windenergieanlage
- {S_{n,1}, ..., S_{n,k}}: Menge von k-Zustandsgrößen der n-ten Windenergieanlage

## Patentansprüche

1. Verfahren zur Regelung einer Wirkleistung in einem Windpark mit mindestens zwei Windenergieanlagen, deren Leistungsabgabe durch jeweils einen Windenergieanlagenregler geregelt wird, wobei ein Sollwert der von dem Windpark abzugebenden Wirkleistung (Pₛₑₜ, P_{set,global}) an einem Windparkmodell (20) anliegt, das einen modellierten Wirkleistungssollwert (P'ₛₑₜ) des Windparks erzeugt, der zusammen mit einem Istwert der von dem Windpark abgegebenen Wirkleistung (P_{act}) an einem Subtraktionsglied anliegt, das eine Regeldifferenz (e) für einen Leistungsregler (30) bereitstellt, der eine Reglerstellgröße (u_{reg}) erzeugt, zu der eine unabhängig von Betriebszuständen der Windenergieanlagen des Windparks und deren Istwerten bestimmte Vorsteuerstellgröße (u_{ff}) zu einer Gesamtstellgröße (u) addiert wird, wobei der modellierte Wirkleistungssollwert (P'ₛₑₜ) des Windparks aus einer Summe von modellierten Wirkleistungssollwerten (p_{simO,1}, p_{simO,2}, p_{simO,n}) bestimmt wird, wobei der Wirkleistungssollwert des Windparks auf Modelle (221, 222, 22n) der in dem Windpark enthaltenen Windenergieanlagen aufgeteilt wird und die Modelle der Windenergieanlagen jeweils einen modellierten Wirkleistungssollwert der jeweiligen Windenergieanlage (p_{simO,1}, p_{simO,2}, p_{simO,n}), abhängig von einem auf das jeweilige Modell entfallenden Anteil des Wirkleistungssollwerts (p_{simI,1}, p_{simI,2}, p_{simI,n}) bestimmen.

2. Verfahren zur Regelung nach Anspruch 1, **dadurch gekennzeichnet, dass** das Verhalten des Windparks durch die Modelle (221, 222, 22n) der Windenergieanlagen abgebildet wird.

3. Verfahren zur Regelung nach Anspruch 1 oder 2, **dadurch gekennzeichnet, dass** der Wirkleistungssollwert des Windparks (Pₛₑₜ, P_{set,global}) auf die Modelle (221, 222, 22n) der in dem Windpark enthaltenen Windenergieanlagen aufgeteilt wird.

4. Verfahren nach einem der Ansprüche 1 bis 3, **dadurch gekennzeichnet, dass** die Gesamtstellgröße (u) auf Stellgrößen für die einzelnen Windenergieanlagen (u_{WT,1}, u_{WT,2}, u_{WT,n}) aufgeteilt wird.

5. Verfahren nach einem der Ansprüche 1 bis 4, **dadurch gekennzeichnet, dass** mindestens eine Zustandsgröße einer der Windenergieanlagen (S_{1,1}, ..., S_{1,k,} S_{n,1}, ..., S_{n,k}) an dem jeweiligen Modell (221, 222, 22n) der Windenergieanlage anliegt, um eine Abweichung des Wirkleistungsistwerts der Windenergieanlage (p_{act,1}, p_{act,2}, P_{act,n}) und dem modellierten Wirkleistungssollwert (p_{simO,1}, p_{simO,2}, p_{simO,n}) der Windenergieanlage zu minimieren.

6. Verfahren nach einem der Ansprüche 1 bis 5, **dadurch gekennzeichnet, dass** die Modelle der in dem Windpark enthaltenen Windenergieanlagen anlagenspezifische Parameter abbilden.

7. Windpark mit mindestens zwei Windenergieanlagen und einem Windparkregler (70), an dem ein Sollwert für die von dem Windpark abzugebende Wirkleistung (Pₛₑₜ, P_{set,global}) zur Steuerung der in dem Windpark enthaltenen Windenergieanlagen anliegt, der Windparkregler (70) umfassend:
- einer Vorsteuereinheit (60), die eingerichtet ist, unabhängig von Betriebszuständen der Windenergieanlagen des Windparks und deren Istwerten, eine Vorsteuerstellgröße (u_{ff}) zu ermitteln, und
- einem Windparkmodell (20), das eingerichtet ist, aus dem Sollwert für die von dem Windpark abzugebende Wirkleistung (Pₛₑₜ, P_{set,global}) einen modellierten Wirkleistungswert (P'ₛₑₜ) des Windparks zu ermitteln,
- einem Differenzglied, das eingerichtet ist, aus dem modellierten Wirkleistungswert (P'ₛₑₜ) des Windparks und einem Istwert der von dem Windpark abgegebenen Wirkleistung (P_{act}) eine Regeldifferenz (e) zu ermitteln,
- einem Leistungsregler (30), der eingerichtet ist, aus der Regeldifferenz (e) eine Reglerstellgröße (u_{reg}) zu ermitteln, und
- einem Summationsglied, das eingerichtet ist, aus der Vorsteuerstellgröße (u_{ff}) und der Reglerstellgröße (u_{reg}) eine Gesamtstellgröße (u) als Wirkleistungssollwert für den Windpark zu ermitteln,
**dadurch gekennzeichnet, dass**
das Windparkmodell (20) für die in dem Windpark enthaltenen Windenergieanlagen mehrere Modelle der Windenergieanlagen (220, 221, 22n) aufweist, an denen jeweils ein Anteil (p_{simI}) der von dem Windpark abzugebenden Wirkleistung anliegt, wobei jedes der Modelle der Windenergieanlagen (220, 221, 22n) einen modellierten Wirkleistungssollwert der durch die Windenergieanlagen jeweils zu erzeugenden Wirkleistung (p_{simO}) bestimmt.

8. Windpark nach Anspruch 7, **dadurch gekennzeichnet, dass** eine oder mehrere Windenergieanlagen in einem Modell der in dem Windpark enthaltenen Windenergieanlagen enthalten sind.

9. Windpark nach Anspruch 7 oder 8, **dadurch gekennzeichnet, dass** eine erste Aufteileinheit (210) vorgesehen ist, die den Wirkleistungssollwert des Windparks auf die Modelle der in dem Windpark enthaltenen Windenergieanlagen aufteilt.

10. Windpark nach einem der Ansprüche 7 bis 9, **dadurch gekennzeichnet, dass** ein Summationsglied vorgesehen ist, das die modellierten Wirkleistungssollwerte für die einzelnen Windenergieanlagen aufsummiert, wobei die Summe an einem Subtraktionsglied anliegt, das abhängig von dem anliegenden Wirkleistungssollwert des Windparks und einem Istwert der an einem Netzverknüpfungspunkt des Windparks eingespeisten Wirkleistung eine Regeldifferenz (e) bereitstellt.

11. Windpark nach einem der Ansprüche 7 bis 10, **dadurch gekennzeichnet, dass** eine zweite Aufteileinheit (40) vorgesehen ist, die die Gesamtstellgröße (u) auf Stellgrößen für die einzelnen Windenergieanlagen aufteilt.

12. Windpark nach einem der Ansprüche 7 bis 11, **dadurch gekennzeichnet, dass** mindestens eine Zustandsgröße einer der Windenergieanlagen an dem jeweiligen Modell der Windenergieanlage anliegt, um eine Abweichung von Wirkleistungsistwert der Windenergieanlage und dem modellierten Wirkleistungswert der Windenergieanlage zu minimieren.

13. Windpark nach einem der Ansprüche 7 bis 12, **dadurch gekennzeichnet, dass** die Modelle der in dem Windpark enthaltenen Windenergieanlagen anlagenspezifische Parameter abbilden.

## Claims

1. A method for controlling an active power in a wind farm comprising at least two wind turbines, the power output of which is controlled by means of one wind turbine controller in each case, wherein a set value of the active power (Pₛₑₜ, P_{set,global}) to be output by the wind farm is applied to a wind farm model (20), which generates a modeled active power set value (P'ₛₑₜ) of the wind farm that is applied, together with an actual value of the active power (P_{act}) output by the wind farm, to a subtraction element, which provides a control deviation (e) for a power controller (30), which generates a controller manipulated variable (u_{reg}) to which a pre-control manipulated variable (u_{ff}), which is determined irrespective of operating states of the wind turbines of the wind farm and their actual values, is added to give a total manipulated variable (u), wherein the modeled active power set value (P'ₛₑₜ) of the wind farm is determined from the sum of modeled active power set values (p_{simO,1}, p_{simO,2}, p_{simO,n}), wherein the active power set value of the wind farm is divided between models (221, 222, 22n) of the wind turbines contained in the wind farm and the models of the wind turbines each determine a modeled active power set value of the relevant wind turbine (p_{simO,1}, p_{simO,2}, p_{simO,n}) depending on a proportion of the active power set value (p_{simI,1}, p_{simI,2}, p_{simI,n}) allotted to the relevant model.

2. The control method according to claim 1, **characterized in that** the behavior of the wind farm is simulated by means of the models (221, 222, 22n) of the wind turbines.

3. The control method according to claim 1 or 2, **characterized in that** the active power set value of the wind farm (Pₛₑₜ, P_{set,global}) is divided between the models (221, 222, 22n) of the wind turbines comprised in the wind farm.

4. The method according to any one of claims 1 to 3, **characterized in that** the total manipulated variable (u) is divided into manipulated variables for the individual wind turbines (u_{WT,1}, u_{WT,2}, u_{WT,n}).

5. The method according to any one of claims 1 to 4, **characterized in that** at least one state variable of one of the wind turbines (S_{1,1}, ..., S_{1,k}, S_{n,1}, ..., S_{n,k}) is applied to the relevant model (221, 222, 22n) of the wind turbine in order to minimize a difference between the active power actual value of the wind turbine (p_{act,1}, p_{act,2}, p_{act,n}) and the modeled active power set value (p_{simO,1}, p_{simO,2}, p_{simO,n}) of the wind turbine.

6. The method according to any one of claims 1 to 5, **characterized in that** the models of the wind turbines comprised in the wind farm simulate turbine-specific parameters.

7. A wind farm comprising at least two wind turbines and a wind farm controller (70), to which a set value for the active power (Pₛₑₜ, P_{set,global}) to be output by the wind farm is applied in order to control the wind turbines comprised in the wind farm, the wind farm controller (70) comprising:
- a pre-control unit (60), which is configured to determine a pre-control manipulated variable (u_{ff}) irrespective of operating states of the wind turbines of the wind farm and their actual values, and
- a wind farm model (20), which is configured to determine a modeled active power value (P'ₛₑₜ) of the wind farm from the set value for the active power (Pₛₑₜ, P_{set,glebal}) to be output by the wind farm,
- a deviation element, which is configured to determine a control deviation (e) from the modeled active power value (P'ₛₑₜ) of the wind farm and an actual value of the active power (P_{act}) output by the wind farm,
- a power controller (30), which is configured to determine a controller manipulated variable (u_{reg}) from the control deviation (e), and
- a summation element, which is configured to determine a total manipulated variable (u) as the active power set value for the wind farm from the pre-control manipulated variable (u_{ff}) and the controller manipulated variable (u_{reg}),
**characterized in that**
the wind farm model (20) comprises multiple models of the wind turbines (220, 221, 22n) for the wind turbines comprised in the wind farm, to which models a proportion (p_{simI}) of the active power to be output by the wind farm is applied in each case, wherein each of the models of the wind turbines (220, 221, 22n) determines a modeled active power set value of the active power (p_{simO}) to be generated by the wind turbines in each case.

8. The wind farm according to claim 7, **characterized in that** one or more wind turbines are contained in a model of the wind turbines comprised in the wind farm.

9. The wind farm according to claim 7 or 8, **characterized in that** a first dividing unit (210) is provided, which divides the active power set value of the wind farm between the models of the wind turbines comprised in the wind farm.

10. The wind farm according to any one of claims 7 to 9, **characterized in that** a summation element is provided, which adds up the modeled active power set values for the individual wind turbines, wherein the sum is applied to a subtraction element, which provides a control deviation (e) depending on the applied active power set value of the wind farm and an actual value of the active power fed in at a grid connection point of the wind farm.

11. The wind farm according to any one of claims 7 to 10, **characterized in that** a second dividing unit (40) is provided, which divides the total manipulated variable (u) into manipulated variables for the individual wind turbines.

12. The wind farm according to any one of claims 7 to 11, **characterized in that** at least one state variable of one of the wind turbines is applied to the relevant model of the wind turbine in order to minimize a difference between the active power actual value of the wind turbine and the modeled active power value of the wind turbine.

13. The wind farm according to any one of claims 7 to 12, **characterized in that** the models of the wind turbines comprised in the wind farm simulate turbine-specific parameters.

## Revendications

1. Procédé de réglage d'une puissance active dans un parc éolien comprenant au moins deux éoliennes, dont la puissance de sortie est réglée respectivement par un régulateur d'éolienne, dans lequel une valeur de consigne de la puissance active à délivrer par le parc éolien (Pₛₑₜ, P_{set,global}) est appliquée à un modèle de parc éolien (20) produisant une valeur de consigne de puissance active modélisée (P'ₛₑₜ) du parc éolien, laquelle est appliquée, ensemble avec une valeur réelle de la puissance active (P_{act}) délivrée par le parc éolien, à un organe de soustraction fournissant une différence de réglage (e) pour un régulateur de puissance (30) produisant une grandeur de commande de régulateur (u_{reg}) à laquelle est ajoutée une grandeur de pré-commande (u_{ff}) déterminée indépendamment d'états de fonctionnement des éoliennes du parc éolien et des valeurs réelles de celles-ci, de manière à obtenir une grandeur de commande globale (u), où la valeur de consigne de puissance active (P'ₛₑₜ) du parc éolien est déterminée à partir d'une somme de valeurs de consigne de puissance active modélisées (p_{simO,1}, p_{simO,2}, p_{simO,n}), où la valeur de consigne de puissance active du parc éolien est répartie entre des modèles (221, 222, 22n) des éoliennes comprises dans le parc éolien et les modèles des éoliennes déterminent respectivement une valeur de consigne de puissance active modélisée (p_{simO,1}, p_{simO,2}, p_{simO,n}) de l'éolienne respective, en fonction d'une part de la valeur de consigne de puissance active (p_{simI,1}, p_{simI,2}, p_{simI,n}) constituant le modèle respectif.

2. Procédé de réglage selon la revendication 1, **caractérisé en ce que** le comportement du parc éolien est représenté par les modèles (221, 222, 22n) des éoliennes.

3. Procédé de réglage selon la revendication 1 ou 2, **caractérisé en ce que** la valeur de consigne de puissance active du parc éolien (Pₛₑₜ, P_{set,global}) est répartie entre les modèles (221, 222, 22n) des éoliennes comprises dans le parc éolien.

4. Procédé selon l'une des revendications 1 à 3, **caractérisé en ce que** la grandeur de commande globale (u) est répartie entre des grandeurs de commande pour les différentes éoliennes (u_{WT,1}, u_{WT,2}, u_{WT,n}).

5. Procédé selon l'une des revendications 1 à 4, **caractérisé en ce qu'**au moins une grandeur d'état de l'une des éoliennes (S_{l,l}, ..., S_{l,k}, S_{n,l}, ..., S_{n,k}) est appliquée au modèle (221, 222, 22n) respectif de l'éolienne, afin de minimiser un écart entre la valeur réelle de puissance active de l'éolienne (p_{act,1}, p_{act,2}, p_{act,n}) et la valeur de consigne de puissance active modélisée (p_{simO,1}, p_{simO,2}, p_{simO,n}) de l'éolienne.

6. Procédé selon l'une des revendication 1 à 5, **caractérisé en ce que** les modèles des éoliennes comprises dans le parc éolien représentent des paramètres spécifiques à une éolienne.

7. Parc éolien comprenant au moins deux éoliennes et un régulateur de parc éolien (70), auquel est appliquée une valeur de consigne de la puissance active à délivrer par le parc éolien (Pₛₑₜ, P_{set,global}) pour la commande des éoliennes comprises dans le parc éolien, le régulateur de parc éolien (70) comportant :
- une unité de pré-commande (60) conçue pour définir une grandeur de pré-commande (u_{ff}) indépendamment d'états de fonctionnement des éoliennes du parc éolien et des valeurs réelles de celles-ci, et
- un modèle de parc éolien (20) conçu pour définir une valeur de puissance active modélisée (P'ₛₑₜ) du parc éolien à partir de la valeur de consigne pour la puissance active à délivrer par le parc éolien (Pₛₑₜ, P_{set,global}),
- un organe de différence conçu pour définir une différence de réglage (e) à partir de la valeur de puissance active modélisée (P'ₛₑₜ) du parc éolien et d'une valeur réelle de la puissance active (P_{act}) délivrée par le parc éolien,
- un régulateur de puissance (30) conçu pour définir une grandeur de commande de régulateur (u_{reg}) à partir de la différence de réglage (e), et
- un organe d'addition conçu pour définir une grandeur de commande globale (u) en tant que valeur de consigne de puissance active pour le parc éolien, à partir de la grandeur de pré-commande (u_{ff}) et de la grandeur de commande de régulateur (u_{reg}),
**caractérisé en ce que**
- le modèle de parc éolien (20) pour les éoliennes comprises dans le parc éolien présente plusieurs modèles des éoliennes (221, 222, 22n), auxquels est appliquée respectivement une part (p_{simI}) de la puissance active à délivrer par le parc éolien, où chacun des modèles des éoliennes (221, 222, 22n) détermine une valeur de consigne de puissance active modélisée de la puissance active à produire respectivement par les éoliennes (p_{simO}).

8. Parc éolien selon la revendication 7, **caractérisé en ce qu'**une ou plusieurs éoliennes sont comprises dans un modèle des éoliennes comprises dans le parc éolien.

9. Parc éolien selon la revendication 7 ou 8, **caractérisé en ce qu'**il est prévu une première unité de répartition (210) chargée de répartir la valeur de consigne de puissance active du parc éolien entre les modèles des éoliennes comprises dans le parc éolien.

10. Parc éolien selon l'une des revendications 7 à 9, **caractérisé en ce qu'**il est prévu un organe d'addition chargé d'additionner les valeurs de consigne de puissance active modélisées pour les différentes éoliennes, où la somme est appliquée à un organe de soustraction chargé de fournir une différence de réglage (e) en fonction de la valeur de consigne de puissance active appliquée du parc éolien et d'une valeur réelle de la puissance active alimentée au niveau d'un point de connexion au réseau du parc éolien.

11. Parc éolien selon l'une des revendications 7 à 10, **caractérisé en ce qu'**il est prévu une deuxième unité de répartition (40) chargée de répartir la grandeur de commande globale (u) entre des grandeurs de commande pour les différentes éoliennes.

12. Parc éolien selon l'une des revendications 7 à 11, **caractérisé en ce qu'**au moins une grandeur d'état de l'une des éoliennes est appliquée au modèle respectif de l'éolienne, afin de minimiser un écart entre la valeur réelle de puissance active de l'éolienne et la valeur de puissance active modélisée de l'éolienne.

13. Parc éolien selon l'une des revendications 7 à 12, **caractérisé en ce que** les modèles des éoliennes comprises dans le parc éolien représentent des paramètres spécifiques à une éolienne.
